# EUROPEAN PATENT APPLICATION

(11) **EP 4 456 272 A2**
(43) Date of publication of application: **30.10.2024**
(21) Application number: 24167609.7
(22) Date of filing: 28.03.2024
(51) Int. Cl.: H01M 50/107, H01M 50/152, H01M 50/171, H01M 50/536, H01M 50/559

(54) **CYLINDRICAL SECONDARY BATTERY**

(30) Priority: 24.04.2023 KR 20230053230
(71) Applicant: Samsung SDI Co., Ltd., Yongin-si, Gyeonggi-do 17084 (KR)
(72) Inventor: KO, Sung Gwi, 17084 Yongin-si (KR); YU, Gwan Hyeon, 17084 Yongin-si (KR); PARK, Gun Gue, 17084 Yongin-si (KR); JUNG, Hyun Ki, 17084 Yongin-si (KR); JUN, Woo Tae, 17084 Yongin-si (KR); YOO, Yoon Sun, 17084 Yongin-si (KR); KIM, Myung Seob, 17084 Yongin-si (KR)
(74) Representative: Marks & Clerk LLP

(57) **Abstract**

A cylindrical secondary battery including: an electrode assembly including a first electrode plate, a separator, and a second electrode plate; a case accommodating the electrode assembly and having an open lower end, the case being electrically connected to the second electrode plate; a first current collector plate between an upper surface of the electrode assembly and the case and being electrically connected to the first electrode plate; a terminal extending through an upper surface of the case and having a lower end electrically and mechanically coupled to an upper surface of the first current collector plate, the terminal having: a welding groove having a depth downward from an upper surface thereof; and a sealing member filling the welding groove; and a cap plate sealing the lower end of the case.

## Description

### BACKGROUND

### 1. Field

Aspects of embodiments of the present disclosure relate to a cylindrical secondary battery.

### 2. Description of the Related Art

Generally, a cylindrical secondary battery includes a cylindrical electrode assembly, a cylindrical can accommodating the electrode assembly and an electrolyte solution, and a cap assembly coupled to an opening at one side of the can to seal the can. The cap assembly is also electrically connected to the electrode assembly to electrically connect an external component (or an external device) with the electrode assembly.

In a battery module including a plurality of cylindrical secondary batteries connected to one another, bus bars need to be respectively connected to upper and lower portions (or ends) of the secondary batteries, complicating the structure and complicating and increasing the process (e.g., manufacturing) time.

In some examples, a terminal hole may be provided at the opposite side of the can from the open side, and a rivet terminal acting as a positive electrode is coupled to the can in the form of a rivet terminal that is insulated from the can. In this case, bus bars can provided at the same side of the secondary battery, making it easier to connect the bus bars in a secondary battery module.

However, welding through a winding core of the electrode assembly is required to connect the rivet terminal and a current collector plate of the electrode assembly to each other. Thus, metal foreign substances, such as fume or spatter, may be generated inside a battery. When metal foreign substances are generated, a dust collection operation to remove the generated metal foreign substances must be performed. Further, the electrode assembly may be damaged due to the welding heat.

The above information disclosed in this Background section is for enhancement of understanding of the background of the present disclosure, and therefore, it may contain information that does not constitute prior art.

### SUMMARY

Embodiments of the present disclosure provide a cylindrical secondary battery having a welding groove in a terminal such that the terminal and a current collector plate can be welded to each other from the outside of a case. Further, the welding groove can be filled with a sealing member to reduce or eliminate risks due to pinholes, etc. which may occur during over-welding, and also to improve airtightness.

A cylindrical secondary battery, according to an embodiment of the present disclosure, includes: an electrode assembly including a first electrode plate, a separator, and a second electrode plate; a case accommodating the electrode assembly and having an open lower end, the case being electrically connected to the second electrode plate; a first current collector plate between an upper surface of the electrode assembly and the case and being electrically connected to the first electrode plate; a terminal extending through an upper surface of the case and having a lower end electrically and mechanically coupled to an upper surface of the first current collector plate, the terminal having: a welding groove having a depth downward from an upper surface thereof; and a sealing member filling the welding groove; and a cap plate sealing the lower end of the case.

The depth of the welding groove may be greater than a height of the sealing member.

At least one protrusion or groove may be provided on an inner surface of the welding groove.

The sealing member may include a fixing member positioned and shaped corresponding to the at least one protrusion or groove in the welding groove.

The terminal may include: a head on an upper portion of the case; and a fastening part extending from a center of the head toward an inside of the case and integrally formed with the head.

The first current collector plate may be laser-welded from outside the terminal through the welding groove when an upper surface thereof is in contact with a lower surface of the fastening part, and a welding bead may be formed within the welding groove.

A thickness of the fastening part from a lower surface of the welding groove to a lower surface of the fastening part may be in a range of 0.5 mm to 1.5 mm.

The welding groove may extend through the center of the head in a downward direction from an upper portion of the fastening part.

The cylindrical secondary battery may further include a first gasket between the terminal and the case.

The welding groove may have an upper inner diameter larger than a lower inner diameter thereof.

The case may have: a beading part recessed into the case at an upper portion of the cap plate; and a crimping part bent inwardly at a lower end of the case to fix the cap plate at a lower portion thereof.

The cylindrical secondary battery may further include a second gasket between the cap plate and the beading part and between the cap plate and the crimping part, and the cap plate may be non-polar.

The cylindrical secondary battery may further include a second current collector plate having a circular plate shape corresponding to a lower surface of the electrode assembly and contacting and electrically connected to the second electrode plate exposed at the lower surface of the electrode assembly.

The second current collector plate may have: a circular planar part contacting the lower surface of the electrode assembly; and an extension part extending downwardly from an edge of the planar part.

The extension part of the second current collector plate may be between the second gasket and the beading part and may be bent or rounded along the beading part.

The cap plate may include a vent in a central region of the cap plate, and the vent may be a notch formed upwardly from a lower surface of the cap plate.

The case may have: an upper surface part having a flat plate shape and having a terminal hole at a center thereof; and a side surface part extending downwardly from an edge of the upper surface part.

The cylindrical secondary battery may further include an inner insulation member covering an inner surface of the upper surface part of the case.

In the electrode assembly, a positive electrode uncoated portion not coated with a positive electrode active material may protrude upwardly from the first electrode plate, and a negative electrode uncoated portion not coated with a negative electrode active material may protrude downwardly from the second electrode plate.

At least some of the above and other features of the invention are set out in the claims.

### BRIEF DESCRIPTION OF DRAWINGS

FIG. 1 is a perspective view of a cylindrical secondary battery according to various embodiments of the present disclosure.
FIG. 2 is a cross-sectional view of the cylindrical secondary battery shown in FIG. 1.
FIGS. 3A and 3B are enlarged cross-sectional views of portion 3 in FIG. 2.
FIGS. 4A and 4B are partial cross-sectional views illustrating a welding groove and a sealing member of the cylindrical secondary battery shown in FIG. 1 according to another embodiment.

### DETAILED DESCRIPTION

Hereinafter, embodiments of the present disclosure will be described, in detail, and purely by way of example, with reference to the accompanying drawings.

Examples of the present disclosure are provided to more completely describe aspects and features of the present disclosure to those skilled in the art, and the following embodiments may be modified in various other forms. In other words, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

In the accompanying drawings, sizes or thicknesses of various components may be exaggerated for brevity and clarity. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

The same reference numerals are used to indicate parts having similar configurations and operations throughout the specification. In addition, when a part is said to be electrically coupled to another part, this includes not only a case where it is directly connected but also a case where it is connected with another element interposed therebetween.

Embodiments of the present disclosure will now be described in detail with reference to the accompanying drawings to the extent that a person skilled in the art to which the present disclosure belongs can easily implement the present disclosure.

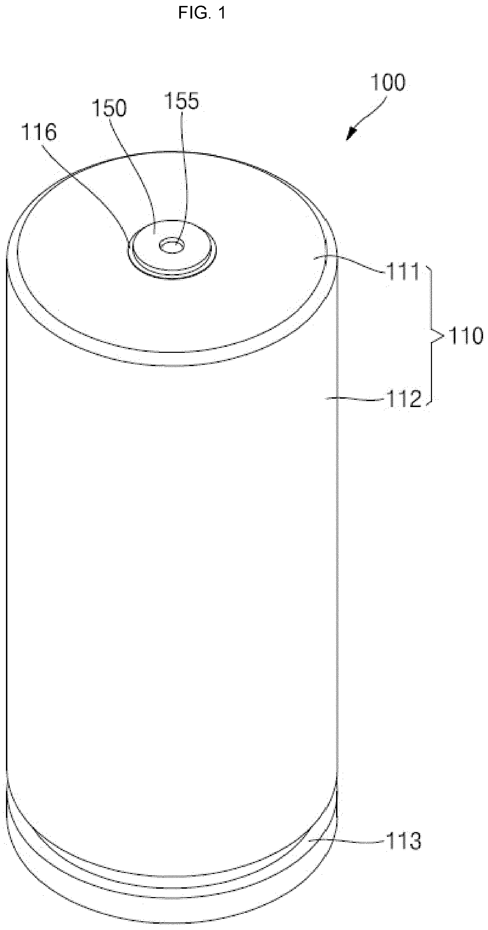

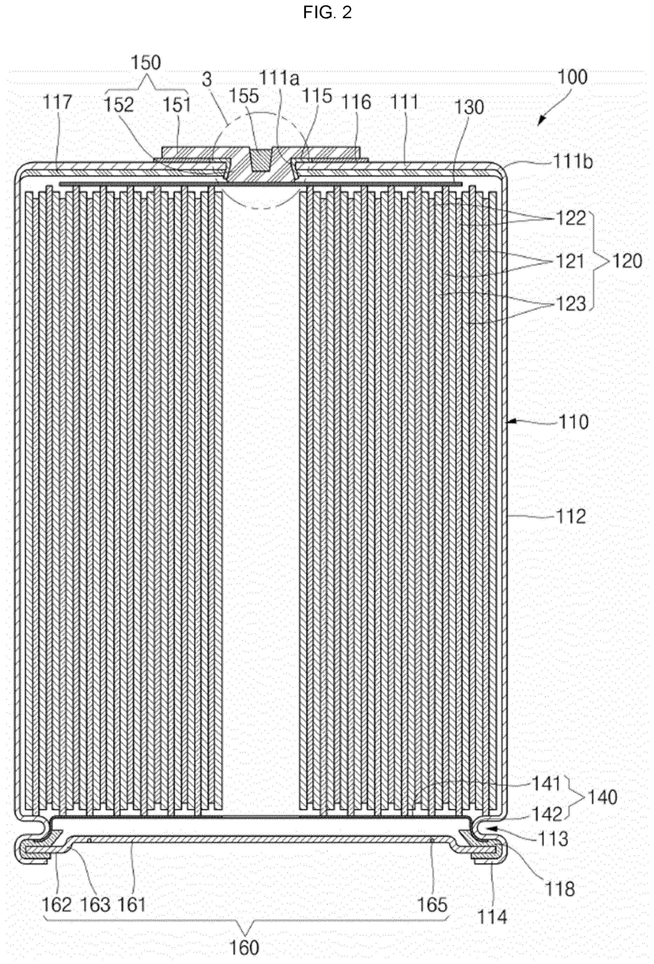

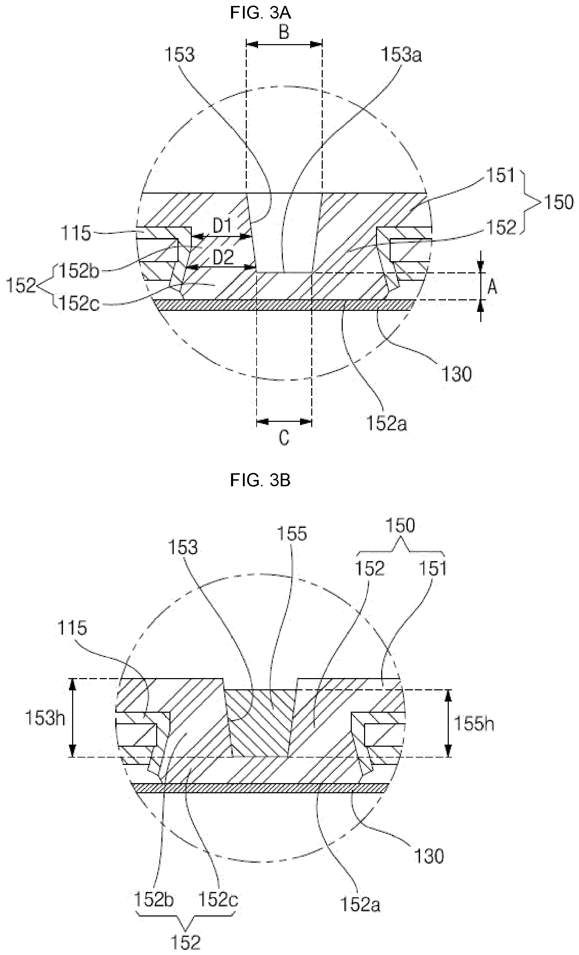

FIG. 1 is a perspective view of a cylindrical secondary battery 100 according to various embodiments of the present disclosure. FIG. 2 is a cross-sectional view of the cylindrical secondary battery 100 shown in FIG. 1. FIGS. 3A and 3B are enlarged cross-sectional views of the portion 3 in FIG. 2.

As shown in FIGS. 1 and 2, the cylindrical secondary battery 100, according to embodiments of the present disclosure, may include a case (e.g., a can) 110, an electrode assembly 120 accommodated inside the case 110, a terminal 150 coupled to a terminal hole (e.g., a terminal opening) provided at one end of the case 110, and a cap plate 160 sealing an opening at another end (e.g., the opposite end) of the case 110.

The case 110 has a circular upper surface part 111 and a side surface part 112 extending a length (e.g., a predetermined length) downwardly from an edge of the upper surface part 111. The upper surface part 111 and the side surface part 112 of the case 110 may be integrally formed. In addition, a bent portion 111b bent to have a round (or rounded) shape may be between the upper surface part 111 and the side surface part 112.

The circular upper surface part 111 may have a flat circular plate shape and may have a terminal hole (e.g., a terminal opening) 111a penetrating (e.g., extending through) the center thereof. The terminal 150 may be inserted into and coupled to the terminal hole 111a in the upper surface part 111. A first gasket 115 for sealing and electrical insulation may be interposed between the terminal hole 111a and the terminal 150. The first gasket 115 blocks (or prevents) contact between the terminal 150 and the case 110 to electrically separate (or electrically isolate) the terminal 150 and the case 110 from each other. The first gasket 115 may seal the terminal hole 111a in the upper surface part 111 of the case 110. The first gasket 115 may be made of a resin or polymer/plastics material, such as polyethylene (PE), polypropylene (PP), or polyethylene terephthalate (PET).

The case 110 may further include an inner insulation member 117 provided to cover an inner surface of the upper surface part 111. In one embodiment, the inner insulation member 117 may be attached to an inner surface of the upper surface part 111 by coating or bonding. The inner surface of the upper surface part 111 refers to a surface of the upper surface part 111 facing an upper surface of the electrode assembly 120 and may be the lower surface of the upper surface part 111. The inner insulation member 117 may prevent contact between the upper surface part 111 of the case 110 and a first electrode plate 121 of the electrode assembly 120. In some embodiments, the inner insulation member 117 may extend to the inner surface of the bent portion 111b. The inner insulation member 117 may be provided to cover inner surfaces of the upper surface part 111 and the bent portion 111b or may be provided to cover only the inner surface of the upper surface part 111.

In the cylindrical secondary battery 100, the lower portion of the case 110 is open during the manufacturing process. Accordingly, during the manufacturing process of the cylindrical secondary battery 100, the electrode assembly 120 may be inserted into the case 110 through the open lower portion of the case 110 together with an electrolyte. Here, the electrolyte and the electrode assembly 120 may be inserted into the case 110 in a state in which the open lower portion faces upwardly (e.g., upwardly in the gravitational direction). After the electrolyte and the electrode assembly 120 are inserted into the case 110, the cap plate 160 is coupled to the open end (e.g., the open lower end) to seal the inside of the case 110. The electrolyte enables movement of lithium ions between a positive electrode plate 121 and a negative electrode plate 122 in the electrode assembly 120. The electrolyte may be a non-aqueous organic electrolyte solution that is a mixture of lithium salt and high-purity organic solvents. In some embodiments, the electrolyte solution may be a polymer including a polymer electrolyte or a solid electrolyte, but the type of electrolyte is not limited herein.

The case 110 may be formed of steel, a steel alloy, aluminum, an aluminum alloy, or an equivalent thereof, but the material is not limited thereto. A beading part (e.g., a bead) 113 that is recessed toward (or into) the inside of the case 110 is formed at an upper portion of (e.g., above) the cap plate 160 so that the electrode assembly 120 does not escape to the outside of the case 110, and a crimping part (e.g., a crimp) 114 that is bent toward the inside of the case 110 may be formed at a lower portion of (e.g., below) the cap plate 160. The cap plate 160 may be fixed and sealed to the case 110 by the crimping part 114.

After the electrode assembly 120 is inserted through the open lower end of the case 110, the beading part 113 is formed to prevent the electrode assembly 120 from separating from the case 110.

The electrode assembly 120 includes the first electrode plate 121, the second electrode plate 122, and a separator 123. The first electrode plate 121 may be a positive electrode plate, and the second electrode plate 122 may be a negative electrode plate. Of course, the reverse is also possible. Hereinafter, for convenience of explanation, an embodiment in which the first electrode plate 121 is a positive electrode plate and the second electrode plate 122 is a negative electrode plate will be described as an example.

The first electrode plate 121 is a plate-shaped metal foil made of aluminum (Al) and at least one surface thereof is coated with a positive electrode active material made of a transition metal oxide. The first electrode plate 121 may also have a positive electrode uncoated portion that is not coated with the positive electrode active material at an upper end of the metal foil. The positive electrode uncoated portion may protrude upwardly from the electrode assembly 120. For example, the positive electrode uncoated portion of the first electrode plate 121 may protrude more upwardly than (e.g., may protrude above or may protrude beyond) the second electrode plate 122 and the separator 123.

The second electrode plate 122 may be a plate-shaped metal foil made of copper (Cu) or nickel (Ni) and at least one surface thereof is coated with a negative electrode active material made of graphite or carbon. The second electrode plate 122 may also have a negative electrode uncoated portion that is not coated with the negative electrode active material at a lower portion of the metal foil. The negative electrode uncoated portion may protrude downwardly from the electrode assembly 120. For example, the negative electrode uncoated portion of the second electrode plate 122 may protrude more downwardly than (e.g., may protrude below or may protrude beyond) the first electrode plate 121 and the separator 123.

The separator 123 may be made of polyethylene (PE) or polypropylene (PP) but is not limited thereto. The separator 123 may prevent an electrical short between the first electrode plate 121 and the second electrode plate 122 while allowing the movement of lithium ions therebetween.

After the first electrode plate 121, the second electrode plate 122, and the separator 123 are stacked, the electrode assembly 120 is wound from a winding end into a substantially cylindrical shape. In addition, in the electrode assembly 120, the positive electrode uncoated portion that is not coated with the positive electrode active material may protrude upwardly from the first electrode plate 121, and the negative electrode uncoated portion that is not coated with the negative electrode active material may protrude downwardly from the second electrode plate 122. In the electrode assembly 120, the outermost positive electrode uncoated portion may not protrude upwardly and the outermost negative electrode uncoated portion may not protrude downwardly. For example, the electrode assembly 120 may have a step that is more concave at the upper and lower outermost portions compared with other regions. When the inner insulation member 117 is not formed on the bent portion 111b of the case 110, the separator 123 of the electrode assembly 120 may prevent contact between the electrode assembly 120 and the case 110.

The first current collector plate 130 may be a circular metal plate shaped to correspond to the upper surface of the electrode assembly 120. A plane (or planar) size of the first current collector plate 130 may be equal to or smaller than a size of an upper surface of the electrode assembly 120. The first current collector plate 130 may be made of aluminum (Al). The first current collector plate 130 may be fixed and electrically connected to the first electrode plate 121 exposed at the upper side (or upper end) of the electrode assembly 120 by welding in a state in which the lower surface of the first electrode plate 121 is in contact with the upper surface of the electrode assembly 120. The first current collector plate 130 may be fixed and electrically connected to the terminal 150 by welding in a state in which the upper surface of the first electrode plate 121 is in contact with the lower surface of the terminal 150. The first current collector plate 130 acts as a passage for current flow between the first electrode plate 121 of the electrode assembly 120 and the terminal 150. The first current collector plate 130 may be welded to the electrode assembly 120, stored in (or inserted into) the case 110, and then welded to the terminal 150. The first current collector plate 130 may have a thickness in a range of about 0.2 mm to about 1.5 mm. The thickness of the first current collector plate 130 may be smaller than a lower thickness A (see, e.g., FIG. 3A) of the fastening part 152 of the terminal 150, thereby improving weldability.

The second current collector plate 140 may have a circular planar part 141 corresponding to the lower surface of the electrode assembly 120 and an extension part 142 extending downwardly from an edge of the planar part 141. An upper surface of the planar part 141 may be in contact with a lower surface of the electrode assembly 120. The upper surface of the planar part 141 may be fixed and electrically connected to the second electrode plate 122 exposed at the lower portion of the electrode assembly 120 by welding in a state of being in contact with the lower surface of the electrode assembly 120.

The extension part 142 may extend downwardly from the edge of the planar part 141. For example, the extension part 142 may include a plurality of extension parts spaced apart from each other along the edge of the planar part 141. The extension part 142 may be bent to extend downwardly from the edge of the planar part 141. In addition, the extension part 142 may be in contact with the inner surface of the beading part 113. For example, the extension part 142 may be rounded or bent along the beading part 113. The inner surface may refer to an inner surface of the case 110. The extension part 142 may have an end (e.g., a distal end) located (or arranged) between the beading part 113 and a second gasket 118. The extension part 142 may be in contact with and coupled to the beading part 113 of the case 110. For example, the extension part 142 may be coupled by welding in a state of being in contact with the inner surface of the beading part 113 of the case 110. The second current collector plate 140 acts as a current flow path between the second electrode plate 122 of the electrode assembly 120 and the case 110. That is, the case 110 may be a negative electrode terminal. In addition, the second current collector plate 140 may have a hole (e.g., an opening) penetrating between (or extending between) an upper surface and a lower surface at the center of the planar part 141, and the electrolyte may be easily injected into the electrode assembly 120 through the hole.

The terminal 150 may be inserted into the terminal hole 111a in the upper surface part 111 of the case 110 and electrically connected to the first current collector plate 130. The terminal 150 may be electrically connected to the first electrode plate 121 of the electrode assembly through the first current collector plate 130. That is, the terminal 150 may be a positive electrode terminal. The terminal 150 and the case 110 may have different polarities. The terminal 150 may be made of the same or similar material as the first current collector plate 130 and the first electrode plate 121. A diameter of a head 151 of the terminal 150 exposed at the upper portion (or upper end) of the case 110 and a diameter of the lower surface 152a located inside the case 110 may be larger than the diameter of the terminal 150 in the terminal hole 111a.

The terminal 150 may include the head 151 exposed at the upper portion of the case 110 and a fastening part 152 extending from the center of the head 151 toward the inside of the case 110. A planar size of the head 151 may be larger than that of the fastening part 152. In the terminal 150, an upper end of the fastening part 152 may be connected to a lower surface of the head 151, and the head 151 and the fastening part 152 may be integrally formed. The terminal 150 may be coupled to the inside of the terminal hole 111a of the case 110 from the outside. The first gasket 115 may be interposed between the terminal 150 and the case 110. The lower portion of the fastening part 152 is compressed (e.g., is compression molded) by riveting, and the terminal hole 111a may be sealed by pressing the first gasket 115. The fastening part 152 may have a wider diameter in a direction from the terminal hole 111a toward the inside of the case 110. The fastening part 152 may have an upper fastening part 152b located in the terminal hole 111a of the case 110 and a lower fastening part 152c located inside the case 110. The lower fastening part 152c may have a larger diameter than the upper fastening part 152b. That is, the lower fastening part 152c may overlap the planar case 110. In addition, the fastening part 152 may have a larger diameter at or close to the lower surface 152a than at other regions thereof. In addition, the lower surface 152a of the fastening part 152 may be a plane. It may have chamfered edges or a chamfered perimeter, as shown more clearly in Figures 3A and 3B.

An outer insulation member 116 may be interposed between the head 151 and the upper surface part 111 of the case 110. That is, the head 151 is located above the upper surface part 111, and the outer insulation member 116 blocks electrical contact therebetween by being interposed in a region at where the head 151 and the upper surface part 111 overlap on a plane. In addition, the outer insulation member 116 may be interposed between the head 151 and the upper surface part 111 of the case 110 so as not to overlap (e.g., to be offset from) the first gasket 115 on a plane.

The first gasket 115 is interposed between the fastening part 152 and the terminal hole 111a in the case 110, and an upper end thereof may extend between the head 151 and the upper surface part 111 of the case 110. The end of the upper end of the first gasket 115 may come into contact with the outer insulation member 116. That is, the first gasket 115 and the outer insulation member 116 may be interposed between the terminal 150 and the case 110 to electrically insulate and seal the terminal 150 and the case 110. In some embodiments, the first gasket 115 and the outer insulation member 116 may be formed as an integral gasket. The first gasket 115 may come into contact with upper and lower surfaces of the upper surface part 111 of the case 110. The first gasket 115 may be in contact with the inner insulation member 117.

The terminal 150 may have a welding groove 153 having a certain depth from the upper surface of the head 151 toward in the fastening part 152. For example, the welding groove 153 may pass through the center of the head 151 and may be formed from the top to the bottom of the fastening part 152. The depth of the welding groove 153 may be smaller than the total height (or thickness) of the terminal 150. See Figure 3A. That is, the terminal 150 has the welding groove 153 such that the lower thickness A of the fastening part 152 of the terminal 150 may be reduced. That is, the terminal 150 is provided with the welding groove 153 so that the lower thickness A of the fastening part 152 of the terminal 150 can be reduced. The lower thickness A of the fastening part 152 may be a thickness from the lower inner surface (e.g., the bottom) 153a of the welding groove 153 to the lower surface 152a of the fastening part 152. The lower thickness A of the fastening part 152 is reduced by the welding groove 153, and thus, welding of the terminal 150 and the first current collector plate 130 can be performed from the outside of the case 110.

The lower thickness A of the fastening part 152 may be in a range of about 0.5 mm to about 1.5 mm. When the lower thickness A of the fastening part 152 is smaller than about 0.5 mm, the terminal 150 may not be sufficiently rigid. When the lower thickness A of the fastening part 152 is greater than about 1.5 mm, it may be difficult to weld the terminal 150 and the first current collector plate 130 to each other from the outside of the case 110.

The upper inner diameter of the welding groove 153 may be larger than the lower inner diameter thereof. Also, the lower inner diameter of the welding groove 153 may be smaller than that of the terminal hole 111a. The lower inner diameter of the welding groove 153 may be in a range of about 0.5mm to about 2mm. When the lower inner diameter of the welding groove 153 is smaller than about 0.5mm, welding with the first current collector plate 130 may be difficult due to an insufficient welding area. When the lower inner diameter of the welding groove 153 is greater than about 2mm, riveting may be difficult due to an increase in size and a decrease in rigidity of the terminal 150. In addition, the inner diameter of the upper side of the welding groove 153 may be in a range of about 2mm to about 5mm When the inner diameter of the upper side of the welding groove 153 is smaller than about 2mm, it is difficult to secure a welding area so that the head 151 on the outside of the welding groove 153 may be damaged during welding. When the upper inner diameter of the welding groove 153 is greater than about 5mm, riveting may be difficult due to the increase in size and decrease in rigidity of the terminal 150.

In addition, because the upper inner diameter of the welding groove 153 is larger than the lower inner diameter thereof, a side thickness D2 of the lower fastening part 152c inside the case 110 may be larger than a side thickness D1 of the upper fastening part 152b. The side thicknesses D1, D2 may be a shortest straight line distance from the outer surface of the fastening part 152 to the welding groove 153. In addition, the side thicknesses D1 and D2 of the fastening part 152 may be larger than the lower thickness A.

The terminal 150 has the welding groove 153 such that, when welding with the first current collector plate 130 from the outside of the terminal 150, a welding bead is formed inside the welding groove 153 such that the bead does not protrude from the terminal 150. The terminal 150 may be coupled by laser welding in a state in which the flat lower surface 152a is in contact with the upper surface of the first current collector plate 130.

In addition, because the terminal 150 has the welding groove 153, welding with the first current collector plate 130 can be performed from the outside of the terminal 150, thereby preventing welding foreign substances from being generated inside the case 110 and preventing the electrode assembly 120 from being damaged by welding heat.

In addition, in the terminal 150, a sealing member 155 may fill the inside of the welding groove 153. See Figures 1, 2 and 3B. The sealing member 155 may be provided to fill an inside of the welding groove 153 after the terminal 150 is coupled to the first current collector plate 130 by welding. The sealing member 155 may block contact between the welding area and air and, thus, can prevent oxidation of the welding area. Because the sealing member 155 can seal pinholes that may be generated due to over-welding when laser welding is performed between the terminal 150 and the first current collector plate 130, sealing capacity of the inside of the cylindrical secondary battery 100 can be improved.

A height 155h of the sealing member 155 (see, e.g., FIG. 3B) may be smaller than a depth 153h of the welding groove 153. That is, the upper surface of the sealing member 155 may be lower than (or below) the height of the upper surface of the head 151. When the sealing member 155 protrudes more upwardly than (e.g., protrude above) the upper surface of the head 151, it may be difficult to connect a connection element, such as a bus bar, to a terminal when manufacturing the battery module.

The sealing member 155 may be a moldable resin or a moldable material. For example, the sealing member 155 may be a resin that is cured by ultraviolet light (e.g., ultraviolet rays). After the sealing member 155 is filled in the welding groove 153, it is possible to quickly cure the sealing member 155 by ultraviolet rays, thereby improving the manufacturing speed. In another embodiment, the sealing member 155 may be made of epoxy, urethane, silicone, or equivalent materials.

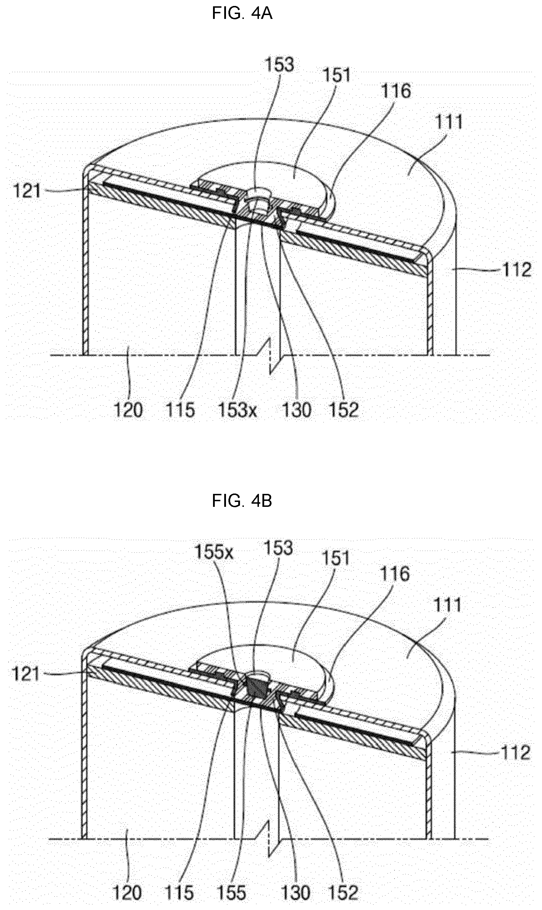

Referring to FIG. 4A, the terminal 150 may have a fixing structure 153x in the form of a protrusion or a concave slit protruding from the surface of the welding groove 153. The fixing structure 153x may be a slit (or groove) formed in the outer direction of the inner diameter of the upper surface part 111 of the case 110 or a protrusion formed in the center direction of the inner diameter of the upper surface part 111 of the case 110. The fixing structure 153x may be a slit-shaped groove horizontal to the head 151 or a horizontal protrusion. When the fixing structure 153x is in the form of a slit, as shown in FIG. 4A, the sealing member 155 filling the inside of the welding groove 153 may also fill the inside of the slit as shown in FIG. 4B. That is, the sealing member 155 may have a fixing structure 155x in the form of a protrusion filling the fixing structure 153x of the welding groove 153. The fixing structure 155x of the sealing member 155 and the fixing structure 153x of the welding groove 153 may be shaped to correspond to each other.

In another embodiment, when the fixing structure 153x is in the form of a protrusion, the sealing member 155 may cover the fixing structure 153x when the sealing member 155 is filled in the welding groove 153. That is, the sealing member 155 may have a fixing structure 155x in the form of a groove shaped to correspond to the fixing structure 153x in the form of a protrusion. The fixing structure 155x of the sealing member 155 may be formed to correspond to the inner shape of the welding groove 153 when the sealing member 155 fills the inside of the welding groove 153.

The fixing structure 153x can prevent the sealing member 155 from being separated by an external impact after being filled in the welding groove 153. The shape of the fixing structure 153x may be variously modified, including slits spaced apart from each other along the inner diameter of the welding groove 153, grooves spaced apart from each other, or a configuration including both shapes of grooves and slits. That is, the fixing structure 153x may be at least one protrusion or groove provided on or in the surface of the welding groove 153.

The cap plate 160 is a circular metal plate and may be coupled to the lower end of the case 110. The lower surface of the cap plate 160 may be exposed to the outside. The cap plate 160 may be coupled to the lower end of the case 110 in a state in which the second gasket 118 is interposed therebetween, thereby preventing the cap plate 160 from being electrically connected to the case 110. Because the cap plate 160 is not electrically connected to the positive electrode or the negative electrode of the electrode assembly 120, there may be no separate electrical polarity (e.g., the cap plate 160 may be electrically floating).

An edge region 162 of the cap plate 160 may be fixed in a state of being positioned between the beading part 113 and the crimping part 114 of the case 110. In more detail, in a state in which the second gasket 118 is interposed under the lower portion of the beading part 113 of the case 110, the cap plate 160 may be seated on the lower portion of the case 110. Thereafter, the crimping part 114 of the case 110 may be bent inwardly toward the cap plate 160 to press the second gasket 118, thereby coupling the cap plate 160 and the case 110 to each other. The second gasket 118 may be formed of a resin material, such as polyethylene (PE), polypropylene (PP), or polyethylene terephthalate (PET). The second gasket 118 may apply pressure to and seal the case 110 and the cap plate 160 and may prevent the cap plate 160 from being separated from the case 110. The second gasket 118 may have an upper portion interposed between the beading part 113 and the cap plate 160 and a lower portion interposed between the crimping part 114 and the cap plate 160. A lower end of the second gasket 118 may protrude toward the center of the cap plate 160 farther than the crimping part 114.

The cap plate 160 may have a central region 161 positioned below the second current collector plate 140 and an edge region 162 interposed between the beading part 113 and the crimping part 114 of the case 110 and coupled to the case 110. The central region 161 of the cap plate 160 may be concave toward the inside of the case 110 relative to the edge region 162. That is, the edge region 162 of the cap plate 160 may protrude outwardly from the case 110 relative to the central region 161. The cap plate 160 may have a connection region 163 connecting the central region 161 and the edge region 162. The connection region 163 may be inclined due to a step between the central region 161 and the edge region 162. In addition, bent portions may be provided between the connection region 163 and the central region 161 and between the connection region 163 and the edge region 162.

The cap plate 160 has a vent 165 to be opened (e.g., to burst) at a reference pressure in the central region 161. The vent 165 may have a smaller thickness than other regions of the cap plate 160. The vent 165 may be a notch formed upwardly from the lower surface of the cap plate 160.

In the cylindrical secondary battery 100, when excessive internal pressure is generated inside the case 110, the vent 165 is broken (e.g., bursts) so that the excessive internal pressure can be discharged. The vent 165 in the cap plate 160 may be spaced apart from the center thereof and may have a ring shape on a plane. In another embodiment, the vent 165 may have at least one pattern having a straight or curved shape on a plane. The thickness of the vent 165 may be smaller than the thicknesses of other regions of the cap plate 160. The thickness of the vent 165 may be in a range of about 0.05 mm to about 0.35 mm. When the thickness of the vent 165 is less than about 0.05 mm, deformation or cracking may occur even if the internal pressure of the cylindrical secondary battery 100 does not increase to the reference pressure, and when the thickness exceeds about 0.35 mm, even if the internal pressure of the cylindrical secondary battery 100 increases to the reference pressure, the vent 165 may not be broken and may not operate as a vent.

As described above, in the cylindrical secondary battery according to various embodiments of the present disclosure, a terminal and a current collector plate can be welded to each other from the outside of a case through a welding groove provided in the terminal. Thus, welding impurities can be prevented from being generated inside the case and an electrode assembly is not damaged by welding heat.

In addition, in the cylindrical secondary battery according to various embodiments of the present disclosure, after a terminal and a current collector plate are welded to each other through a welding groove, a sealing member may fill the inside of the welding groove, thereby eliminating a risk due to pinholes, etc., which may occur during over-welding, and may improve airtightness.

While the foregoing embodiments are only some embodiments for carrying out the cylindrical secondary battery according to the present disclosure, which is not limited to these embodiments, it will be understood by a person skilled in the art that various changes in form and details may be made therein without departing from the scope of the present disclosure as defined by the following claims and their equivalents.

## Claims

1. A cylindrical secondary battery comprising:
an electrode assembly comprising a first electrode plate, a separator, and a second electrode plate;
a case accommodating the electrode assembly and having an open lower end, the case being electrically connected to the second electrode plate;
a first current collector plate between an upper surface of the electrode assembly and the case and being electrically connected to the first electrode plate;
a terminal extending through an upper surface of the case and having a lower end electrically and mechanically coupled to an upper surface of the first current collector plate, the terminal having:
a welding groove having a depth downward from an upper surface thereof; and
a sealing member filling the welding groove; and
a cap plate sealing the lower end of the case.

2. The cylindrical secondary battery as claimed in claim 1, wherein the depth of the welding groove is greater than a height of the sealing member.

3. The cylindrical secondary battery as claimed in claim 1 or claim 2,
wherein at least one protrusion or groove is provided on an inner surface of the welding groove.

4. The cylindrical secondary battery as claimed in claim 3, wherein the sealing member comprises a fixing member positioned and shaped corresponding to the at least one protrusion or groove in the welding groove.

5. The cylindrical secondary battery as claimed in any one of the preceding claims, wherein the terminal comprises:
a head on an upper portion of the case; and
a fastening part extending from a center of the head toward an inside of the case and integrally formed with the head, optionally wherein a thickness of the fastening part from a lower surface of the welding groove to a lower surface of the fastening part is in a range of 0.5 mm to 1.5 mm.

6. The cylindrical secondary battery as claimed in claim 5, or any one of the preceding claims, wherein the first current collector plate is laser-welded from outside the terminal through the welding groove when an upper surface thereof is in contact with a lower surface of the fastening part, and
wherein a welding bead is formed within the welding groove.

7. The cylindrical secondary battery as claimed in claim 5 or claim 6,
wherein the welding groove extends through the center of the head in a downward direction from an upper portion of the fastening part.

8. The cylindrical secondary battery as claimed in claim 5 or any one of the preceding claims, further comprising a first gasket between the terminal and the case.

9. The cylindrical secondary battery as claimed in any one of the preceding claims, wherein the welding groove has an upper inner diameter larger than a lower inner diameter thereof.

10. The cylindrical secondary battery as claimed in any one of the preceding claims, wherein the case has:
a beading part recessed into the case at an upper portion of the cap plate; and
a crimping part bent inwardly at a lower end of the case to fix the cap plate at a lower portion thereof.

11. The cylindrical secondary battery as claimed in claim 10, further comprising a second gasket between the cap plate and the beading part and between the cap plate and the crimping part,
wherein the cap plate is non-polar.

12. The cylindrical secondary battery as claimed in claim 12, further comprising a second current collector plate having a circular plate shape corresponding to a lower surface of the electrode assembly and contacting and electrically connected to the second electrode plate exposed at the lower surface of the electrode assembly.

13. The cylindrical secondary battery as claimed in claim 13, wherein the second current collector plate has:
a circular planar part contacting the lower surface of the electrode assembly; and
an extension part extending downwardly from an edge of the planar part, and optionally wherein the extension part of the second current collector plate is between the second gasket and the beading part and is bent or rounded along the beading part.

14. The cylindrical secondary battery as claimed in any one of the preceding claims, wherein the cap plate comprises a vent in a central region of the cap plate, and
wherein the vent is a notch formed upwardly from a lower surface of the cap plate.

15. The cylindrical secondary battery as claimed in any one of the preceding claims, wherein the case has:
an upper surface part having a flat plate shape and having a terminal hole at a center thereof; and
a side surface part extending downwardly from an edge of the upper surface part, and optionally further comprising an inner insulation member covering an inner surface of the upper surface part of the case.

16. The cylindrical secondary battery as claimed in any one of the preceding claims, wherein in the electrode assembly, a positive electrode uncoated portion not coated with a positive electrode active material protrudes upwardly from the first electrode plate, and a negative electrode uncoated portion not coated with a negative electrode active material protrudes downwardly from the second electrode plate.
